# EUROPÄISCHE PATENTSCHRIFT

(11) **EP 0 401 329 B1**
(45) Veröffentlichungstag und Bekanntmachung des Hinweises auf die Patenterteilung: **27.07.1994**
(21) Anmeldenummer: 90900055.6
(22) Anmeldetag: 13.12.1989
(51) Int. Cl.: B01D 29/21, B01D 29/58, B01D 27/06, B01D 35/18

(54) **ÖLFILTER FÜR VERBRENNUNGSMOTOREN**
OIL FILTER FOR INTERNAL COMBUSTION ENGINES
FILTRE A HUILE POUR MOTEURS A COMBUSTION INTERNE

(30) Priorität: 14.12.1988 DE 3842017
(43) Veröffentlichungstag der Anmeldung: 12.12.1990
(73) Patentinhaber: TRABOLD, Hermann, 97877 Wertheim (DE)
(72) Erfinder: TRABOLD, Hermann, 97877 Wertheim (DE)
(74) Vertreter: Czybulka, Uwe, Dipl.-Phys.
(86) Internationale Anmeldenummer: DE8900764
(87) Internationale Veröffentlichungsnummer: WO9006799

(56) Entgegenhaltungen:
- WO-A-88/03431
- WO-A-88/03432
- DE-B- 1 060 843
- FR-A- 1 315 146
- US-A- 3 344 923
- US-A- 3 504 803
- US-A-38 887 467

## Beschreibung

Die Erfindung bezieht sich auf einen ölfilter für Verbrennungsmotoren.

Verbrennungsmotoren sind mit einem ölfilter ausgerütstet, der üblicherweise an dem Motorgehäuse angeflanscht ist. Solche ölfilter entfernen nur einen Teil der Verschmutzung im umlaufenden öl.

Aus der DE-C- 1 051 062 ist ein ölfilter bekannt, bei der die Filterpackung eine Rolle aus Saugpapier, z.B. Toilettenpapier ist, die auf einen zentralen Kern aufgesteckt ist. Solche ölfilter arbeiten als Feinfilter und können zudem in einem Nebenstrom des ölflusses angeordnet, d.h. zusätzlich zu dem vorhandenen ölfilter eingesetzt werden. Damit wird eine wesentlich bessere Filterwirkung erreicht. Durch diese Feinfilterung braucht das öl praktisch nicht ausgewechselt, sondern nur das tatsächlich verbrauchte öl aufgefüllt zu werden.

Das Prinzip dieses ölfilters wurde vielfältig weiterentwickelt. Das öl durchströmt dabei die Papierfilterpackung zwischen Zu- und Ablauf im Gegenstrom, so gemäß der erwähnten Patentschrift oder gemäß der EP-A- 262 596 oder in radialer Richtung wie bei Filtern gemäß der DE-C- 24 60 073 und dem DE-U- 87 00 995. Für die Filterung von Kraftstoffen sind ähnlich aufgebaute Filter bekannt, die im Gleichstrombetrieb arbeiten, so daß der Kraftstoff die gewickelte Filterpackung axial durchströmt; vgl. DE-A 36 17 420.

Aus der FR-A-1315146 ist ein Ölfilter mit mehreren zylindrischen Filterkartuschen bekannt, die eine zentrale Öffnung aufweisen. Zwischen der Wand der Öffnung und der Außenwand der Kartusche ist eine Filterpackung vorgesehen. Die Kartuschen sind durch eine obere perforierte und eine untere geschlossene Wand begrenzt, wobei die geschlossene Wand jedoch eine mittige Öffnung aufweist. Mehrere derartiger Kartuschen können zwischen einem oberen Deckel und einem unteren Deckel, der gleichzeitig ein Auffanggefäß bildet, eingespannt werden, wobei diese Verspannung mit Hilfe eines durch alle Kartuschen verlaufenden und in den zentralen Öffnungen verschraubten Hohlrohres erfolgt. Das zu filternde Öl tritt in einen mittigen Kanal im oberen Deckel ein, strömt dann durch das zentrale Hohlrohr bis in den unteren Deckel und von dort wieder nach oben durch die Filterpackungen sämtlicher Kartuschen.

Mit einer derartigen Konstruktion kann man zwar Filter im Prinzip beliebiger Länge bauen, jedoch ist hierfür eine Vielzahl von unterschiedlich ausgebildeten Teilen notwendig, um die einzelnen Kartuschen miteinander zu verbinden, die beiden Deckel zu verspannen usw.

Ein Filter mit einer mehrstufigen Filtration ist aus der DE-B-1060843 bekannt. Der dort beschriebene Flüssigkeitsfilter weist wenigstens zwei gleiche parallel wirksame und mit axialem Abstand koaxial zueinander angeordnete Filtereinsätze in einem gemeinsamen hohlzylindrischen Gehäuse auf. Auch wenn bei dieser Konstruktion der Ansatz erkennbar ist, einzelne Teile von unterschiedlichen Filtern zu normen, so müssen doch für Filter unterschiedlicher Größe zumindest jeweils unterschiedliche Gehäuse und die damit verbundenen unterschiedlichen Verbindungselemente und Verbindungsstangen zum Verspannen der einzelnen Filtereinsätze bereitgestellt werden.

Aus der US-A-3344923 ist ein Ölfilter insbesondere für Flugmotoren bekannt, der aus zwei aufeinander gesetzten Filterelementen besteht, wobei das zweite Filterelement erst wirksam wird, wenn das erste Filterelement nicht mehr ausreichend filtert. Die beiden Filterelemente weisen an ihren zugewandten Enden Flansche auf, die mit einem Klemmring miteinander verbunden sind. Das zweite Filterelement wird mit Hilfe eines Ventiles zugeschaltet, sobald das erste Filterelement durch Rückstände in dem Öl zugestopft wird und keine Filterwirkung mehr zeigt. Das Ventil schaltet in Abhängigkeit der Druckdifferenz zwischen Ein- und Ausgang um. Beim Schalten des Ventils wird ein Signal abgegeben, das anzeigen soll, den gesamten Filter auszutauschen.

Dieser Filter ist als stets gleich große Einheit konzipiert; es können lediglich die einzelnen Filtereinsätze ausgetauscht werden.

Aus den beiden Druckschriften WO 88/03431 und WO 88/03432 sind Ölfilter bekannt, die aus einem hohlzylindrischen Gehäuse mit einem abnehmbaren Deckel bestehen, wobei in das Gehäuse jeweils eine Filterkartusche eingesetzt werden kann. Die Filterkartusche weist hierbei einen offenen zentralen Kanal auf, der mit einer zentralen Öffnung im Boden des Filters kommuniziert. Über diese Öffnung und den zentralen Kanal in der Filterkartusche strömt das Öl bis zur Oberseite der Filterkartusche und anschließend durch die Filterpackung wiederum in Richtung auf den Boden, wo eine Abflußöffnung vorgesehen ist. Es ist ebenso möglich, in dem oberen Deckel eine zentrale Öffnung vorzusehen und dort das Öl einströmen zu lassen; das Öl strömt dann durch die Filterkartusche und tritt an einer zentralen Öffnung des unteren Deckels aus. Bei dieser Konstruktion ist es nicht vorgesehen, mehrere Filtereinsätze in einem Gehäuse hintereinander schalten zu können, um die Kapazität des Ölfilters an die jeweiligen Filterbedingungen anzupassen.

Für eine annähernd vollständige Feinfilterung des Öls muß das Volumen der Filterpackung auf die Gesamtmenge des umgewälzten Öles, die Durchströmungsgeschwindigkeit und den Öldruck abgestimmt sein. Je größer diese Werte sind, desto größer wird das Volumen der Filterpackung sein. Bis auf den Ölfilter gemäß der oben erwähnten FR-A-1351146 werden herkömmliche Ölfilter daher in verschiedenen Größen gefertigt, um an die unterschiedlichen Filterbedingungen, z.B. unterschiedliche Motorgrößen, angepaßt werden zu können. Dies macht nicht nur die Fertigung, sondern auch die Lagerhaltung aufwendig. Bei der erwähnten FR-A-1351146 ist es zwar schon vorgesehen, mehrere gleichartige Filterkartuschen hintereinander zu schalten, jedoch ist die Verbindung dieser Filterkartuschen und die Verspannung mit den abschließenden oberen und unteren Deckeln nur durch jeweils spezielle Einzelteile möglich.

Der Erfindung liegt die Aufgabe zugrunde, einen Ölfilter der in Rede stehenden Art mit einer einfachen Konstruktion anzugeben, die aus nur wenigen Einzelteilen auf einfache Weise in unterschiedlichen Größen hergestellt werden kann.

Diese Aufgabe ist gemäß der Erfindung durch die im Patentanspruch 1 angegebenen kennzeichnenden Merkmale gelöst.

Demgemäß liegt die Grundidee der Erfindung darin, einen solchen Ölfilter als Bausatz aus nur wenigen Einzelteilen anzubieten, nämlich identischen zylindrischen Wandteilen, Deckeln, bereits auf einen verlängerbaren Kern aufgewickelten Filterpackungen sowie Verbindungsvorrichtungen mit entsprechenden Dichtelementen, um Wandteile und Deckel zu einem geschlossenen Filtergehäuse zu verbinden. In dieses Filtergehäuse brauchen dann nur noch die auf einen verlängerbaren Kern aufgewickelten Filterpackungen eingesetzt zu werden, wobei die Enden der Kerne miteinander verbunden werden, z.B. durch gegenseitige Verschraubung oder Einrasten ineinander.

Der ölfilter kann im Gleichstromprinzip arbeiten, wobei die gewickelte Filterpackung axial durchströmt wird. Die Fertigungseinheiten bestehen hierbei aus einem Wandteil, einem Deckel mit einem als Zu- bzw. Ablauf dienenden Anschluß und einem verlängerbaren Kernstab z.B. aus Vollmaterial, auf den die Filterpackung aufgewickelt ist. Ferner kann das Gegenstromprinzip angewendet werden, bei dem das an einem Deckel zugeführte öl zunächst den hohlen Kernstab durchströmt und dann die Filterpackung axial in der Gegenrichtung durchsetzt. Die Fertigungsteile sind hierbei wiederum ein Wandteil, ein Deckel mit einem Zulauf und einem Ablauf, ein Abschlußdeckel sowie ein hohler Kernstab mit der aufgewickelten Filterpackung. Soll das zu filternde öl radial durch die Filterpackung strömen, so wird der hohle Kernstab mit entsprechenden Durchbrechungen hergestellt.

Das Volumen des Ölfilters und der darin befindlichen gewickelten Filterpackung kann auf einfache Weise dadurch vergrößert werden, daß mehrere Wandteile miteinander verbunden und an ihren beiden Seiten mit einem Deckel abgeschlossen werden. Die Verbindung der Einzelteile erfolgt unter Zwischenschaltung einer Dichtung, die z.B. auf einem Zentrierring gelegen ist, etwa mit Hilfe von Schraub- oder Klemmverbindungen. In dem Filtergehäuse sind dann mehrere Kerne mit aufgewickelten Filterpackungen vorgesehen. Dadurch kann die Filterqualität beeinflußt werden, indem z.B. die Filterpackungen unterschiedliche Porendurchmesser für eine Grob- und Feinfilterung aufweisen. Die Gefahr von Röhrenbildung im Filtermaterial ist weitgehend unterbunden.

Ferner ist es vorteilhaft, die Wandteile und gegebenenfalls auch die Außenflächen der Deckelteile mit Kühlrippen zu versehen, wodurch eine gute Wärmeabstrahlung unter gleichzeitiger Kühlung des durch den ölfilter hindurchströmenden öles erreicht wird.

Weitere Ausgestaltungen der Erfindung gehen aus den Unteransprüchen hervor.

Die Erfindung ist in Ausführungsbeispielen anhand der Zeichnung näher erläutert. In dieser stellen dar:
- Fig. 1: einen schematischen Querschnitt durch einen ölfilter gemäß der Erfindung aus zwei Wandteilen, zwei gleichgestalteten Deckeln und zwei Kernen mit jeweils einer aufgewickelten Filterpackung;

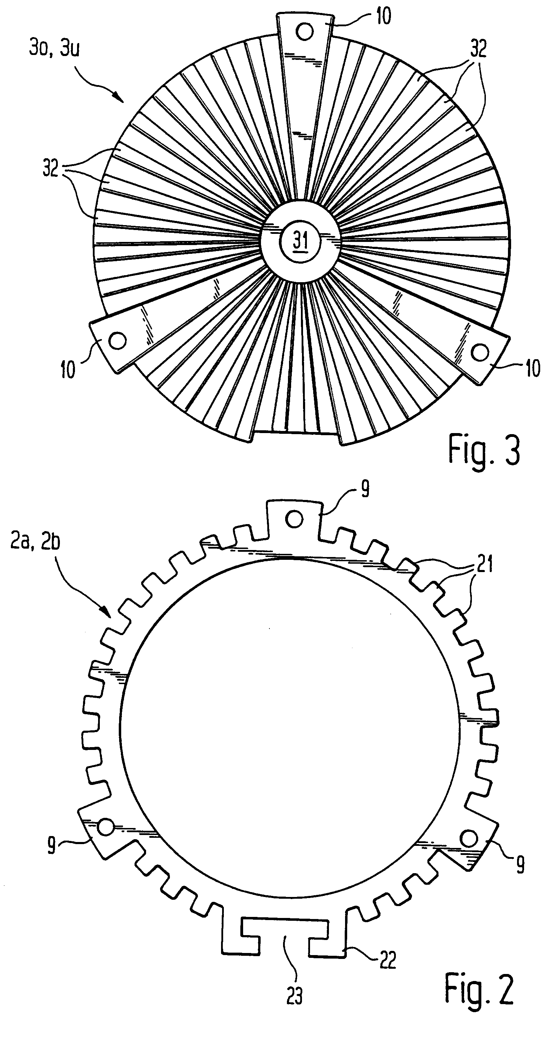

- Fig. 2: einen Querschnitt durch ein Wandteil des ölfilters gemäß Fig. 1;
- Fig. 3: eine Aufsicht auf einen Deckel des Ölfilters gemäß Fig. 1;
- Fig. 4a bis c: unterschiedliche Ausgestaltungen von Kernen für Ölfilter gemäß der Erfindung;
- Fig. 5: einen Querschnitt durch ein Druckventil zum Einsatz in Anschlüssen von Ölfiltern gemäß der Erfindung;
- Fig. 6: eine schematische Darstellung eines Ölfilters, bei dem Wandteile und Deckel untereinander bzw. miteinander mit Hilfe von Klemmringen verbunden sind;
- Fig. 7: eine Aufsicht auf einen solchen Klemmring;
- Fig. 8: eine schematische Darstellung eines Ölfilters, bei dem Wandteile und Deckel miteinander bzw. untereinander über Schraubverbindungen verbunden sind;
- Fig. 9a und 9b: einen Querschnitt bzw. eine Aufsicht auf einen Zentrierring, der zwischen zwei miteinander zu verbindende Wandteile eines Ölfilters einsetzbar ist;
- Fig. 10a, b und c: schematische Darstellungen von Anschlüssen zwischen einem Motor und einem Ölfilter gemäß der Erfindung.

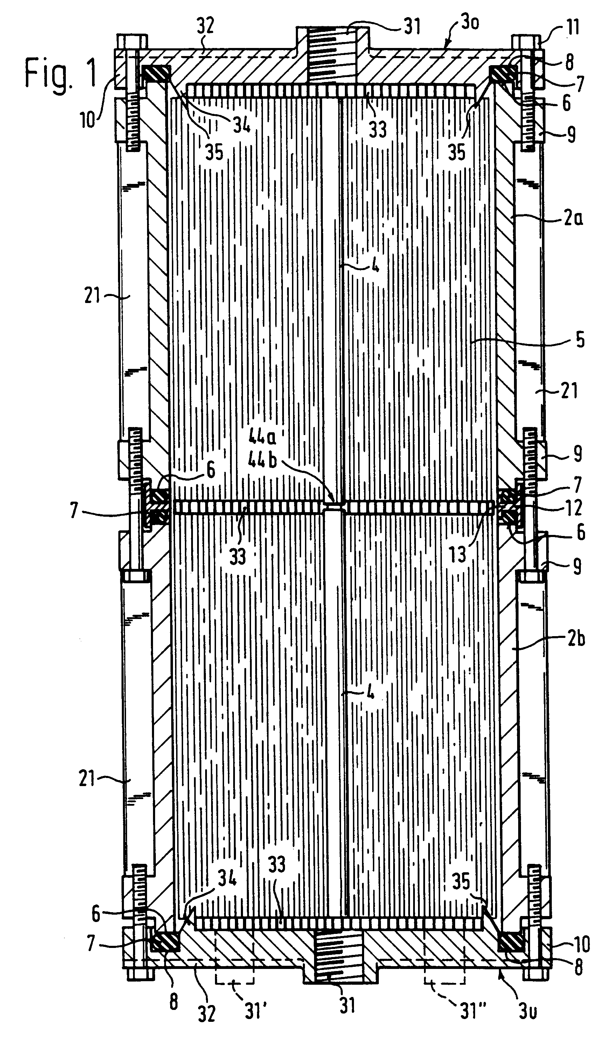

In Fig. 1 ist ein Ölfilter 1 dargestellt, der aus zwei zylindrischen Wandteilen 2a und 2b, einem oberen und einem unteren Deckel 3o bzw. 3u und zwei Kernstäben 4 aus Vollmaterial zusammengesetzt ist, auf die jeweils eine Filterpackung 5 aus Saugpapier aufgewickelt ist. Die zylindrischen Wandteile sind an ihren beiden gegenüberliegenden Umfangsrändern mit Sitzflächen 6 für ein Dichtelement 7, z.B. O-Ringe versehen, wobei die Deckel 3o und 3u ebenso gestaltete Sitzflächen z.B. am Boden einer Nut 8 aufweisen.

Die Wandteile 2a und 2b sind an ihren beiden Seiten mit mehreren Flanschansätzen 9 versehen, in diesem Falle mit drei Flanschansätzen, vgl. Fig. 3, denen ebensolche Flanschansätze 10 an den Deckeln 3o und 3u zugeordnet sind. Über diese Flanschansätze 9 bzw. 10 werden die Wandteile 2a und 2b untereinander bzw. mit den Deckein 3o und 3u jeweils unter Zwischenschaltung von O-Ringen 7 mit Hilfe von Schrauben 11 druckdicht verbunden.

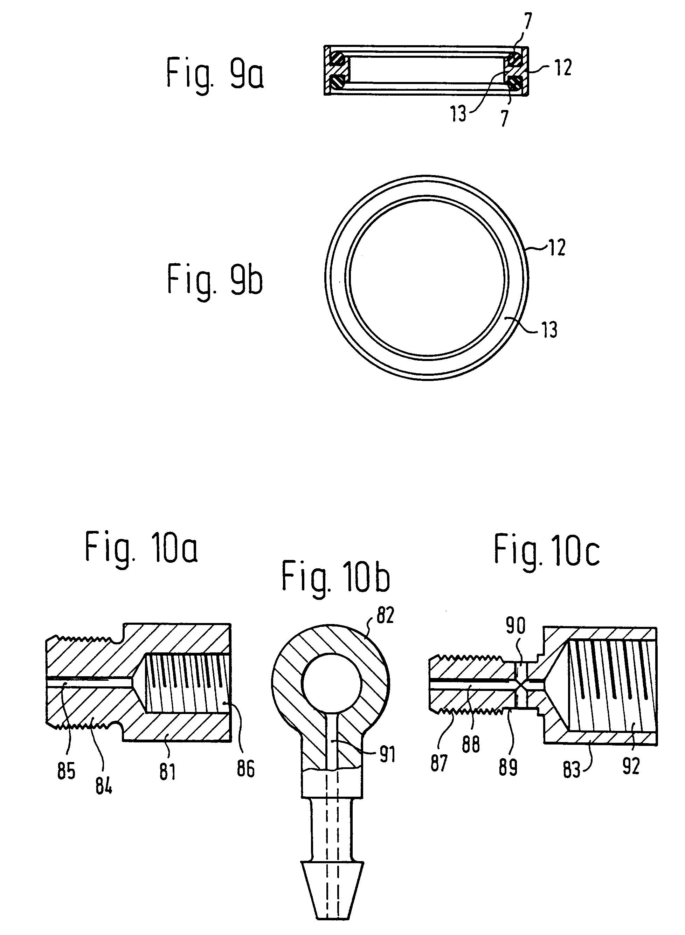

Anstatt zwischen die beiden Wandteile 2a und 2b lediglich einen O-Ring oder eine andere Flächendichtung einzusetzen, ist es auch aus Montagegründen zweckmäßig, zwischen die Wandteile einen Zentrierring 12 zu legen, der die beiden Wandteile am Außenumfang umfaßt und einen radial nach innen reichenden T-Steg 13 aufweist, zu dessen beiden Seiten jeweils O-Ringe 7 oder andere Flächendichtungen gelegen sind, auf denen sich dann die Sitzflächen 6 der beiden Wandteile 2a und 2b abstützen. Dieser O-Klemmring ist deutlicher in den Fig. 9a und 9b gezeigt.

Die gleichgestalteten Wandteile 2a und 2b weisen um ihren Umfang verteilt Kühlrippen 21 auf, die sich über die gesamte axiale Länge der Wandteile erstrecken. Zumindest an ihrem oberen und unteren Rand sind noch Verbindungsansätzen 22 mit einem hohlen T-Querschnitt 23 vorgesehen, mit denen der Ölfilter an einer entsprechenden T-Schiene oder T-Schienenstücken an der Fahrzeugkarosserie befestigt werden kann. Längs dieser T-Schiene kann der Ölfilter bei der Montage stufenlos verschoben werden.

Die beiden gleichgestalteten Deckel 3o und 3u weisen jeweils einen mittigen Schraubanschluß 31 auf, der als Zu- bzw. Ablauf für das zu reinigende Öl dient. Ferner kann, wie in Fig. 1 gestrichelt dargestellt, noch eine Entlüftungsöffnung 31' vorgesehen sein. Die Außenseite der Deckel 3o, 3u ist mit radialen Kühlrippen 32 versehen. In der Deckelinnenseite ist ein Abstandshalter 33, z.B. ein Metallnetz oder ein entsprechendes Rippenmuster vorgesehen.

Dieser Abstandshalter dient zum einen dazu, einen gewissen Abstand zwischen der inneren Mündung des Schraubanschlusses 31 und dem Kernstab 4 einzuhalten, zum anderen dazu, das durch den Schraubanschluß 31 eintretende Öl über die gesamte Fläche der Filterpackung 5 zu verteilen bzw. dem über die gesamte Fläche der Filterpackung 5 austretenden Öl den Weg zu dem Schraubanschluß zu ermöglichen. An der Innenseite der Deckel 3o und 3u ist noch ein umlaufender Steg 34 nahe dem Innenumfang der Wandteile 2a und 2b vorgesehen. Dieser im Querschnitt z.B. dreieckförmige Steg greift mit seinem spitzen Rand 35 in die gewickelte Filterpackung 5 ein. Ein Leckfluß ungereinigten Öles zwischen der Außenwand der Filterpackung und der Innenwand der Wandteile wird durch diese Stege unterbrochen, so daß das Lecköl noch die Filterpackung durchströmen muß, bevor es aus dem Ölfilter austritt. Ein solcher Leckfluß ist allerdings praktisch ausgeschlossen, da die Filterpackung 5 satt an der Innenwand der Wandteile anliegt.

Um den Kern 4 ist die Filterpackung 5 aus Saugpapier gewickelt, die somit den gesamten Raum zwischen dem Kern und der Innenwand des Wandteiles ausfüllt. Mehrere Kernstäbe können miteinander verbunden werden, im Fall des Ölfilters gemäß Fig. 1 sind es zwei Kernstäbe, wobei zwischen zwei Filterpackungen im Bereich der Verbindung der Wandteile jeweils noch ein Abstandshalter 33 gelegen sein kann.

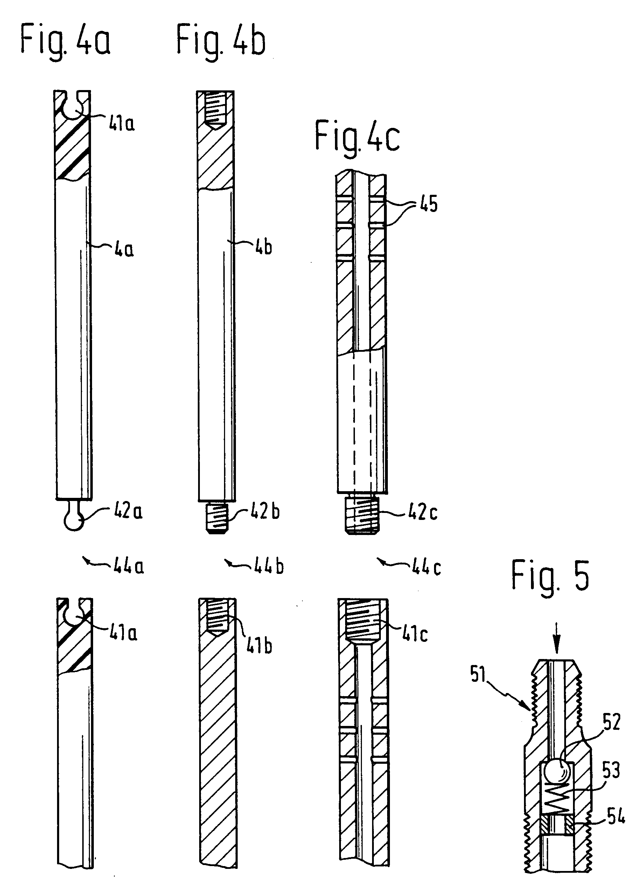

In Fig. 4a ist ein Kernstab 4a gezeigt, der z.B. aus Kunststoff ist. Auf der einen Seite weist der Kernstab 4a ein Steckloch 41a, auf der anderen Seite einen Steckzapfen 42a auf. Zwei Kernstäbe können damit über eine Steckverbindung 44a verbunden werden.

In Fig. 4b dient zum Verlängern der Kerne 4b mit den aufgewickelten Filterpackungen eine Schraubverbindung 44b, wobei jeder Kernstab 4b an einem Ende ein Gewinde 41b und an seinem anderen Ende einen Gewindezapfen 42b aufweist.

In Fig. 4c sind zwei hohle Kernstäbe 4c mit jeweils einem Gewinde 41c und einem Gewindezapfen 42c gezeigt, die mit Hilfe einer Schraubverbindung 44c miteinander verbunden werden. Solche Hohlkerne werden eingesetzt, wenn der Ölfilter nicht, wie in Fig. 1, im Gleichstrombetrieb arbeitet, sondern im Gegenstromprinzip. Das öl fließt dann von dem mittigen Zulauf 31 durch den hohlen Kernstab bis zum gegenüberliegenden Ende des ölfilters, der dort durch einen geschlossenen Deckel abgeschlossen ist. Über den Abstandshalter bzw. Verteiler dieses Abschlußdeckels strömt dann das öl in axialer Richtung durch die Filterpackungen 5 zurück, wird in dem Abstandshalter bzw. Verteiler 33 des unteren Deckels aufgefangen und dort über einen Ablauf abgeführt. Dieser Ablauf ist in Fig. 1 gestrichelt mit 31'' dargestellt. Der hohle Kernstab 4c kann über seine Länge noch hier nur angedeutete Durchbrechungen 45 aufweisen, durch die das zu reinigende öl radial in die Filterpackung einströmt.

In Fig. 5 ist ein Druckventil 51 gezeigt, das in die Schraubanschlüsse 31 eines ölfilters eingeschraubt werden kann. Dieses Druckventil weist als Ventilkörper eine Kugel 52 auf, die über eine Feder abgestützt ist und durch einen Ring 54 gehalten wird. Die Feder 53 ist so dimensioniert, daß das öl erst ab einem bestimmten Druck in Pfeilrichtung in den ölfilter einfließen kann. Dieses Druckventil dient im wesentlichen dazu, daß dann, wenn der beschriebene ölfilter im ölnebenstrom angeordnet ist, beim Start des Motors dieser voll mit dem im ölhauptstromkreis fließenden öl versorgt wird. Dieses Druckventil kann gegebenenfalls zusätzlich als Druckreduzierventil eingesetzt werden, z.B. durch entsprechende Anpassung der Querschnitte der Durchgangsbohrungen, um öl nicht mit zu hohem Druck durch den ölfilter zu treiben.

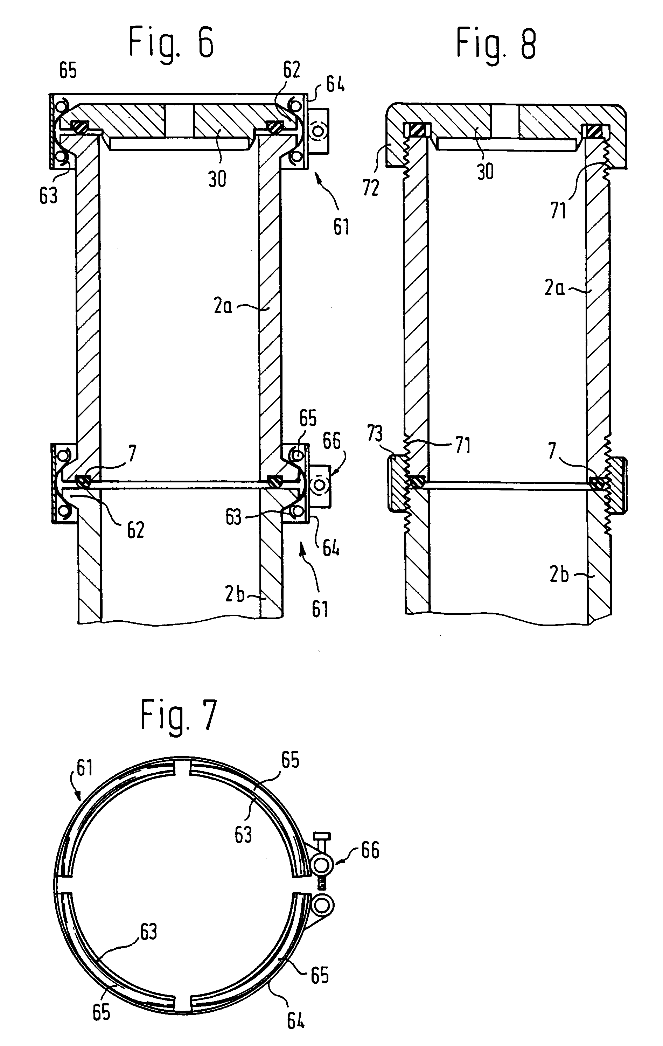

In Fig. 6 ist die Verbindung von Wandteilen und Deckeln eines ölfilters mit Hilfe von Klemmringen 61 gezeigt. An ihren äußeren Umfangsrändern weisen die Wandteile und Deckel eine Bördelung 62 bzw. einen umlaufenden Flansch auf. Zwischen gegeneinander stoßende Flansche der Wandteile ist ein O-Ring 7 bzw. eine ringförmige Flächendichtung 7' eingesetzt. Die Außenränder der Bördelungen werden mit einem Federband 63 umgriffen, das mit einem Klemmringgehäuse 64 fest verbunden ist. Zwischen dem Klemmringgehäuse 64 und den äußeren gebogenen Enden des Federbandes sind über den Umfang des Klemmringes verteilt noch mehrere gebogene Metallstäbe 65 angeordnet. Dadurch kann sich das Federband 63 nicht mehr nach außen verformen. Der Klemmring kann in herkömmlicher Weise mit Hilfe einer Verschraubung 66 oder eines Klemmbügels verschlossen werden. Die federnden Metallstäbe, die sich beim Schließen des Klemmringes fest zwischen die Enden des Federbandes und den Innenumfang des Klemaringgehäuses 64 legen, gewährleisten eine hohe Preßkraft auf die Wandteile bzw. deren Bördelungen, ohne daß wesentliche Verformungskräfte übertragen werden. Damit wird eine auch bei hohen öldrücken dichte Verbindung geschaffen.

In Fig. 8 ist ein Teil eines ölfilters mit zwei Wandteilen 2a und 2b und einem oberen Deckel 3o dargestellt. Die Wandteile weisen an ihren äußeren Rändern Gewinde 71 auf, in die ein Innengewinde eines überwurfes 72 des Deckels 3o eingreift. Die beiden Wandteile 2a und 2b werden durch einen Gewindering 73 miteinander verbunden, der in die Gewinde der aneinanderstoßenden Wandteile 71 eingreift. Zwischen den Wandteilen ist im Bereich dieser Schraubverbindung wiederum ein O-Ring vorgesehen.

Es ist im übrigen auch möglich, die Wandteile mit der Filterpackung zusammen vorzufertigen, so daß bei einer Erneuerung einer Filterpackung das Wandteil mit der gebrauchten Filterpackung entfernt und durch ein ebensolches neues Teil ersetzt wird. Des weiteren ist es möglich, einen Ölfilter aus Wandteilen, Deckein und einer Filterpackung vorzufertigen und bei einer Erneuerung der Filterpackung den gesamten Filter auszutauschen. Wenn mit solchen vorgefertigten Filterpatronen größere Filtervolumina verlangt sind, müssen dementsprechend mehrere komplette Filter hintereinander geschaltet werden.

Um den beschriebenen Ölfilter im Nebenstrom mit einem Motor zu verbinden, sind die in den Fig. 10a, b und c dargestellten Anschlußstücke 81, 82 und 83 vorgesehen. Das Anschlußstück 81 wird mit einem Gewindestutzen 84 anstelle des Ölschalters in den Motorblock geschraubt. Eine zentrale Bohrung 85 führt zu einer inneren Aufnahmebohrung 86, in die ein Gewinde 87 des Anschlußstückes 83 eingeschraubt wird, wobei das Anschlußstück 82 zwischengeschaltet wird. Das Anschlußstück 83 weist eine zentrale Bohrung 88 auf, von der in einem Absatz 89 eine Querbohrung 90 abzweigt, wobei im zusammengeschraubten Zustand der drei Anschlußstücke 81, 82 und 83 das Anschlußstück 82 im Bereich des Absatzes 89 liegt. Von der Querbohrung 90 kann dann in eine Bohrung 91 des Anschlußstückes Öl abgezweigt werden, das zu dem oben beschriebenen Ölfilter führt.
In eine Innenbohrung 92 des Anschlußstückes 83 wird dann der vorhandene Ölschalter eingeschraubt.

## Patentansprüche

1. Ölfilter für Verbrennungsmotoren, welcher aus Einzelteilen eines Bausatzes zusammengesetzt ist, nämlich
- aus einem oder mehreren identischen Wandteil(en) (2a,2b), die an ihren axial äußeren Rändern mit je einer Sitzfläche (6) versehen sind, wobei mehrere Wandteile mit ihren gegenüberliegenden, korrespondierenden Sitzflächen axial aneinander gereiht werden können;
- aus zwei Deckeln (3o,3u), die jeweils eine mit den Sitzflächen der Wandteile (2a,2b) korrespondierende Sitzfläche (8) aufweisen und an welchen die Anschlüsse für Zu- und Ablauf des Öls angebracht sind;
- aus einer oder mehreren Filterpackung(en) (5), die jeweils einen mittigen Kern (4) aufweisen, auf den die Filterpackung aufgewickelt ist, wobei die Kerne jeweils mittels an deren Enden angebrachten Verbindungsanschlüssen (44a,44b,44c) aneinander gereiht und miteinander verbunden werden können, und wobei die Filterpackung mit ihrem Kern (4) jeweils eine dem Wandteil (2a,2b) etwa entsprechende Länge und einen dem Innendurchmesser des Wandteils (2a,2b) entsprechenden Durchmesser aufweist;
- aus Dichtelementen (7,7') zum Einsetzen zwischen den Sitzflächen (6,8) zweier aufeinander liegender Teile (2a,2b,3o,3u);
- und aus im Bereich der Sitzflächen anzuordnenden Verbindungsvorrichtungen (9-11;64-66;71-73), um Wandteile (2a,2b) untereinander beziehungsweise Deckel (30,3u) und Wandteile (2a,2b) miteinander über die Sitzflächen (6,8) und die Dichtelemente (7,7') zu verbinden;
wobei der Ölfilter mindestens einen Wandteil (2a), mindestens eine Filterpackung (5) und zwei Deckel (3o,3u) aufweist, wobei in einem Wandteil (2a,2b) jeweils eine Filterpackung angeordnet ist, wobei Wandteil(e) und Deckel mittels der Verbindungsvorrichtungen (9-11;64-66;71-73) und der Dichtungen (7,7') zu einem geschlossenen Gehäuse verbunden sind, und wobei im Falle mehrerer aneinander gereihter Wandteile und Packungen die Kerne (4) der letzteren mittels der Verbindungsanschlüsse (44a,44b,44c) ebenfalls miteinander verbunden sind.

2. ölfilter nach Anspruch 1, dadurch gekennzeichnet, daß zumindest die Wandteile (2a, 2b) an ihrem Umfang Kühlrippen (21) aufweisen.

3. ölfilter nach Anspruch 1 oder 2, dadurch gekennzeichnet, daß die Deckel (31o, 31u) an ihrer Oberfläche mit Kühlrippen (32) versehen sind.

4. ölfilter nach einem der vorhergehenden Ansprüche, dadurch gekennzeichnet, daß die Verbindungsvorrichtungen Schraubverbindungen (9, 10, 11; 71 bis 73) sind.

5. ölfilter nach einem der Ansprüche 1 bis 3, dadurch gekennzeichnet, daß die Verbindungsvorrichtungen (61 bis 66) jeweils Klemmringe (61) sind, die um Flansche (62 bzw. Bördelungen der Wandteile (2a, 2b) bzw. Deckel (3o, 3u) herumgreifen.

6. ölfilter nach Anspruch 1, dadurch gekennzeichnet, daß der Kern ein Kernstab (4, 4a, 4b) aus Vollmaterial ist, auf den die Filterpackung (5) aus einem Wickel aus Saugpapier gesteckt ist.

7. ölfilter nach Anspruch 1, dadurch gekennzeichnet, daß der Kern ein Hohlstab (4c) ist, auf den die Filterpackung (5) als Wickel aus Saugpapier aufgesteckt ist.

8. ölfilter nach Anspruch 6 oder 7, dadurch gekennzeichnet, daß die Deckel (3o, 3u) an ihren Innenflächen einen umlaufenden axial ausgerichteten Steg (34) aufweisen, der im Bereich des äußeren Randes der Filterpackung (5) in diese eingreift.

9. ölfilter nach einem der vorhergehenden Ansprüche, dadurch gekennzeichnet, daß Anschlüsse (31, 31', 32'') für den Zu- und Ablauf des öls und gegebenenfalls für eine Entlüftung des ölfilters in den Deckeln (3o, 3u) angeordnet und vorzugsweise Schraubanschlüsse sind.

10. ölfilter nach Anspruch 9, dadurch gekennzeichnet, daß in zumindest einen der Anschlüsse (31) ein Druckventil (51) einsetzbar ist.

11. ölfilter nach einem der vorhergehenden Ansprüche, dadurch gekennzeichnet, daß zwischen zwei aneinanderstoßende Wandteile (2a, 2b) ein Zentrierring (12) einsetzbar ist, der die Wandteile (2a, 2b) am Außenumfang umgibt und der zumindest ein an den Sitzflächen (6) der Wandteile (2a, 2b) anliegendes Dichtelement (7) trägt.

12. ölfilter nach Anspruch 11, dadurch gekennzeichnet, daß der Zentrierring (12) einen radial nach innen gerichteten T-Steg (13) aufweist, zu dessen beiden Seiten Dichtelemente (7) gelegen sind.

## Claims

1. An oil filter for internal combustion engines which is composed of single parts of a kit, namely
one or more identical wall portions (2a, 2b) which are each provided on their axially outer edges with a fitting surface (6), whereby several wall portions can be lined up axially with their opposing, corresponding fitting surfaces;
two covers (3o, 3u) each having a fitting surface (8) corresponding with the fitting surfaces of the wall portions (2a, 2b) and bearing the connections for admission and discharge of the oil;
one or more filter packings (5) each having a central core (4) on which the filter packing is wound, whereby the cores can be lined up and interconnected by means of connecting attachments (44a, 44b, 44c) mounted on their ends, and whereby each filter packing with its core (4) has a length corresponding substantially to the wall portion (2a, 2b) and a diameter corresponding to the inside diameter of the wall portion (2a, 2b);
sealing members (7, 7') to be inserted between the fitting surfaces (6, 8) of two parts lying one on the other (2a, 2b, 3o, 3u);
and connecting means (9-11; 64-66; 71-73) to be disposed in the area of the fitting surfaces for connecting wall portions (2a, 2b) with each other or covers (3o, 3u) and wall portions (2a, 2b) with each other via the fitting surfaces (6, 8) and the sealing members (7, 7');
whereby the oil filter has at least one wall portion (2a), at least one filter packing (5) and two covers (3o, 3u), one filter packing being disposed in each wall portion (2a, 2b), wall portion(s) and covers being connected by the connecting means (9-11; 64-66; 71-73) and the seals (7, 7') to form a closed housing and, in the case of several lined up wall portions and packings, the cores (4) of the latter likewise being interconnected by the connecting attachments (44a, 44b, 44c).

2. The oil filter of claim 1, characterized in that at least the wall portions (2a, 2b) have cooling ribs (21) on their periphery.

3. The oil filter of claim 1 or 2, characterized in that the covers (31o, 31u) are provided on their surface with cooling ribs (32).

4. The oil filter of any of the above claims, characterized in that the connecting means are screw connections (9, 10, 11; 71 to 73).

5. The oil filter of any of claims 1 to 3, characterized in that the connecting means (61 to 66) are each clamping rings (61) that engage about flanges (62) or raised edges of the wall portions (2a, 2b) or covers (3o, 3u).

6. The oil filter of claim 1, characterized in that the core is a core rod (4, 4a, 4b) made of solid material on which the filter packing (5) consisting of a roll of absorbent paper is slipped.

7. The oil filter of claim 1, characterized in that the core is a hollow rod (4c) on which the filter packing (5) as a roll of absorbent paper is slipped.

8. The oil filter of claim 6 or 7, characterized in that the covers (3o, 3u) have on their inner surfaces a circumferential, axially aligned bar (34) which engages the filter packing (5) in the area of the outer edge thereof.

9. The oil filter of any of the above claims, characterized in that connections (31, 31', 32'') for admission and discharge of the oil and optionally for venting the oil filter are disposed in the covers (3o, 3u) and are preferably screw connections.

10. The oil filter of claim 9, characterized in that a pressure valve (51) can be inserted in at least one of the connections (31).

11. The oil filter of any of the above claims, characterized in that a centering ring (12) can be inserted between two meeting wall portions (2a, 2b) which surrounds the wall portions (2a, 2b) on the outer periphery and which bears at least one sealing member (7) lying against the fitting surfaces (6) of the wall portions (2a, 2b).

12. The oil filter of claim 11, characterized in that the centering ring (12) has a radially inward directed T-rod (13) with sealing members (7) situated on each side.

## Revendications

1. Filtre d'huile pour les moteurs à combustion, composé des éléments d'assemblage suivants:
- d'un ou plusieurs élément(s) de paroi (2a, 2b) pourvus, sur chacun de leurs bords axialement externes, d'une surface d'appui (6), ceci permettant de réunir plusieurs éléments de paroi de façon que les surfaces d'appui correspondantes de ceux-ci soient alignées axialement;
- de deux couvercles (3o, 3u) qui présentent chacun une surface d'appui (8) correspondant à l'une des surfaces d'appui des éléments de paroi (2a, 2b) et qui portent les raccords d'amenée et d'écoulement de l'huile;
- d'un ou de plusieurs masses filtrantes (5) qui présentent chacune un noyau central (4) sur lequel est enroulée la masse filtrante, les noyaux pouvant être mis à la file et reliés au moyen de raccords (44a, 44b, 44c) prévus sur leurs extrémités, et la masse filtrante avec son noyau (4) ayant une longueur correspondant à peu près à l'élément de paroi (2a, 2b) et un diamètre correspondant au diamètre intérieur de l'élément de paroi (2a, 2b);
- d'éléments d'étanchéité (7, 7') interposés entre les surfaces d'appui (6, 8) de deux éléments (2a, 2b, 3o, 3u) posés l'un sur l'autre; et
- de dispositifs de raccordement (9-11; 64-66; 71-73) à disposer en correspondance des surfaces d'appui pour raccorder, par l'intermédiaire des surfaces d'appui (6, 8) et des éléments d'étanchéité (7, 7'), des éléments de paroi (2a, 2b) ou un couvercle (3o, 3u) et des éléments de paroi (2a, 2b);
le filtre d'huile présentant au moins un élément de paroi (2a), au moins une masse filtrante (5) et deux couvercles (3o, 3u), une masse filtrante étant disposée dans chaque élément de paroi (2a, 2b), l(es) élément(s) de paroi et le couvercle étant associés au moyen des dispositifs de raccordement (9-11; 64-66; 71-73) et des joints d'étanchéité (7, 7') de façon à constituer une boîte fermée, et, dans le cas de plusieurs éléments de paroi et masses filtrantes mis à la file, les noyaux (4) de celles-ci étant également reliés au moyen des raccords (44a, 44b, 44c).

2. Filtre d'huile selon la revendication 1,
caractérisé en ce qu' au moins les éléments de paroi (2a, 2b) présentent, sur leur périphérie, des ailettes de refroidissement (21).

3. Filtre d'huile selon les revendications 1 ou 2,
caractérisé en ce que les couvercles (31o, 31u) sont pourvus, sur leur surface, des ailettes de refroidissement (32).

4. Filtre d'huile selon l'une des revendications précédentes,
caractérisé en ce que les dispositifs de raccordement sont des raccords à vis (9, 10, 11; 71 à 73).

5. Filtre d'huile selon l'une des revendications 1 à 3,
caractérisé en ce que les dispositifs de raccordement (61 à 66) sont des anneaux de serrage (61) saisissant des collerettes (62) ou collets rabattus respectifs des éléments de paroi (2a, 2b) et du couvercle (3o, 3u).

6. Filtre d'huile selon la revendication 1,
caractérisé en ce que le noyau est une tige de noyau (4, 4a, 4b) pleine, sur laquelle est enfilé la masse filtrante (5) constituée par un enroulement de papier absorbant.

7. Filtre d'huile selon la revendication 1,
caractérisé en ce que le noyau est une tige creuse (4c), sur laquelle est enfilé la masse filtrante (5) sous forme d'un enroulement de papier absorbant.

8. Filtre d'huile selon les revendications 6 ou 7,
caractérisé en ce que les couvercles (3o, 3u) présentent, sur leurs surfaces internes, une nervure circulaire (34) s'étendant en direction axial et engageant la masse filtrante (5) dans la zone du bord extérieur de celle-ci.

9. Filtre d'huile selon l'une des revendications précédentes,
caractérisé en ce que des raccords (31, 31', 32'') d'amenée et d'écoulement de l'huile servant, au besoin, au désaérage du filtre d'huile sont disposés dans les couvercles (3o, 3u) et sont constitués de préférence par des raccords à vis.

10. Filtre d'huile selon la revendication 9,
caractérisé en ce qu'une soupape de compression (51) peut être insérée dans au moins l'un des raccords (31).

11. Filtre d'huile selon l'une des revendications précédentes,
caractérisé en ce qu'un anneau de centrage (12) peut être interposé entre deux éléments de paroi (2a, 2b) adjacents, cet anneau entourant la périphérie des éléments de paroi (2a, 2b) et portant au moins un élément d'étanchéité (7) venant en appui sur les surfaces d'appui (6) des éléments de paroi (2a, 2b).

12. Filtre d'huile selon la revendication 11,
caractérisé en ce que l'anneau de centrage (12) présente une nervure en forme de T (13) orientée radialement vers l'intérieur, les éléments d'étanchéité (7) étant disposés de part et d'autre de celle-ci.
